# EUROPEAN PATENT APPLICATION

(11) **EP 4 663 451 A1**
(43) Date of publication of application: **17.12.2025**
(21) Application number: 24181111.6
(22) Date of filing: 10.06.2024
(51) Int. Cl.: B60K 11/02

(54) **A TEMPERATURE MANAGEMENT SYSTEM AND METHOD FOR REGULATING THE TEMPERATURE OF A THERMAL LOAD**

(71) Applicant: VOLVO TRUCK CORPORATION, 405 08 Göteborg (SE)
(72) Inventor: HULTHÉN, Rikard, 444 60 Stora Höga (SE); WILLSTRAND, Olof, 430 30 Frillesås (SE); JEMT, Katarina, 416 56 Göteborg (SE)
(74) Representative: Zacco Sweden AB

(57) **Abstract**

A temperature management system and method for regulating the temperature of a thermal load. The temperature management system comprises a closed circuit and a main coolant pump configured to circulate a coolant through the closed circuit, wherein the closed circuit and the thermal load are thermally connected. The temperature management system is characterized in that a section of the closed circuit is divided into a main branch and a temperature management branch, wherein the main branch is configured to hold a constant differential pressure between its starting point and its endpoint independent of variations in flow and the temperature management branch comprises a cooling and/or heating module. In addition, a flow control module is configured to control the flow of coolant through the temperature management branch, such that a regulated flow that is associated with a target flow rate is directed through the temperature management branch while any remaining flow is directed through the main branch.

## Description

### TECHNICAL FIELD

The disclosure relates generally to a temperature management system and method for regulating the temperature of a thermal load. In particular aspects, the disclosure relates to a temperature management system for an energy storage system of an electrical vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In electric vehicle technology, efficient temperature management of the energy storage system (ESS) is crucial for optimal performance and longevity of the system. Traditionally, temperature management of energy storage systems has employed a combination of pumps, chillers, and electrical heaters or heat exchangers to regulate the temperature of a circulating coolant. These systems were characterized by their use of three-way valves and the positioning of chillers and heaters in parallel configurations. Furthermore, these systems faced challenges, particularly the flow rate's dependence on pressure drops in the overall system, which varied due to factors such as the number of batteries integrated into the main loop and replacement of parts in the system. As a result, any modification in the system's configuration necessitated a recalibration of the flow rates to maintain the desired temperature control. Hence, there is a need for more adaptive and efficient thermal management solutions that can automatically adjust to varying operational conditions without the need for recalibration.

### SUMMARY

According to a first aspect of the disclosure, a temperature management system for regulating the temperature of a thermal load is disclosed. The temperature management system comprises a closed circuit and a main coolant pump configured to circulate a coolant through the closed circuit, and wherein the closed circuit and the thermal load are thermally connected. The temperature management system is characterized in that a section of the closed circuit is divided into a main branch and a temperature management branch, wherein the main branch is configured to hold a constant differential pressure between its starting point and its endpoint independent of variations in flow, and wherein the temperature management branch comprises a cooling and/or heating module. In addition, a flow control module is configured to control the flow of coolant through the temperature management branch, such that a regulated flow meets a target flow rate and is directed through the temperature management branch while any remaining flow is directed through the main branch. The first aspect of the disclosure may seek to solve the problem where any modification in the system's configuration necessitates a recalibration of the flow rates to maintain a desired temperature control. A technical benefit may include that the regulated flow through the temperature management branch is not affected by pressure fluctuations and changes in other parts of the closed circuit.

Optionally in some examples, including in at least one preferred example, the flow control module comprises an auxiliary coolant pump on the temperature management branch, and where the auxiliary coolant pump is configured to be controlled by the target flow rate to generate the regulated flow. A technical benefit may include that the axiliary coolant pump is not dependent on other components in the temperature management system to regulate the flow through the temperature management branch. Preferably, in the examples comprising an auxiliary coolant pump, the constant differential pressure is approximately zero.

Optionally in some examples, including in at least one preferred example, the flow control module comprises a proportional valve on the temperature management branch, where the proportional valve is configured to be controlled by the target flow rate to adjust the regulated flow, and a pressure valve on the main branch configured to hold the constant differential pressure between its inlet and outlet. A technical benefit may include that the proportional valve and the pressure valve utilize the flow generated by the main coolant pump, thus eliminating the need for an auxiliary coolant pump.

Optionally in some examples, the proportional valve may be a frequency-controlled solenoid valve.

Optionally in some examples, including in at least one preferred example, the closed circuit is divided into the main branch and the temperature management branch at a starting point and reconnected at an endpoint, wherein the temperature management branch comprises a redirection back towards the starting point, thereby having the endpoint in proximity to the starting point. A technical benefit may include that having the inlet and the outlet of the temperature management branch at close proximity reduces the flow-dependent pressure drop through the main branch.

Optionally in some examples, including in at least one preferred example, the closed circuit is divided into the main branch and the temperature management branch at a starting point and reconnected at an endpoint, wherein the endpoint is between the main coolant pump and the starting point. A technical benefit may include that having the inlet and the outlet of the temperature management branch in this configuration can reduce the flow-dependent pressure drop through the main branch.

Optionally in some examples, including in at least one preferred example, the main branch is straight. A technical benefit may include a reduced flow-dependent pressure drop through the main branch.

Optionally in some examples, including in at least one preferred example, the main branch has a cross-sectional area that is greater than the cross-sectional area of adjacent sections of the closed circuit. A technical benefit of the main branch having an increased cross-sectional area may include a reduced flow-dependent pressure drop through the main branch.

Optionally in some examples, including in at least one preferred example, the flow control module is configured to receive temperature data from the thermal load and determine the target flow rate based on the received temperature data. A technical benefit may include that the flow control module can quickly adjust the regulated flow based on temperature requirements of the system.

Optionally in some examples, including in at least one preferred example, the flow control module is configured to is configured to determine the target flow rate based on coolant temperature. A technical benefit may include that the flow control module can quickly adjust the regulated flow based on temperature requirements of the system.

Optionally in some examples, including in at least one preferred example, the cooling and/or heating module comprises a chiller arrangement, where the chiller arrangement comprises a first chiller configured to cool the coolant passing through the temperature management branch.

Optionally in some examples, including in at least one preferred example, the chiller arrangement further comprises a second chiller connected in parallel with the first chiller. Technical benefits may include redundancy if one of the chillers fails and flexibility adjusting the cooling capacity based on demand.

Optionally in some examples, including in at least one preferred example, the cooling and/or heating module comprises an electrical heater connected in series with the chiller arrangement and configured to heat the coolant passing through the temperature management branch. A technical benefit may include the ability to both cool and heat the coolant.

Optionally in some examples, including in at least one preferred example, the cooling and/or heating module comprises a heat exchanger connected in parallel with the chiller arrangement, and wherein both the heat exchanger and the chiller arrangement are preceded by a respective shutoff valve. A technical benefit may include the ability to both cool and heat the coolant.

Optionally in some examples, including in at least one preferred example, the flow control module and the cooling and/or heating module are adjusted concurrently to regulate both the flow and the heating/cooling of the coolant. A technical benefit may include enhanced precision in the temperature management of the system.

According to a second aspect of the disclosure, an electric vehicle, comprising a temperature management system according to any of the variants disclosed herein, is disclosed. According to this aspect, the thermal load is an energy storage system of the vehicle. The second aspect of the disclosure may seek to solve the problem where any modification in the temperature management system or energy storage system of an electric vehicle necessitates a recalibration of the flow rates to maintain a desired temperature control. A technical benefit may include that the regulated flow through the temperature management branch is not affected by pressure fluctuations and changes in other parts of the closed circuit.

Optionally in some examples, including in at least one preferred example, the electric vehicle comprises one or more temperature sensors configured to measure temperature data within the energy storage system. A technical benefit may include that the flow control module can quickly adjust the regulated flow based on temperature requirements of the system.

According to a third aspect of the disclosure, a method for managing temperature of a thermal load in a temperature management system is disclosed. A section of a closed circuit is divided into a main branch and a temperature management branch, wherein the main branch is configured to hold a constant differential pressure between its starting point and its endpoint independent of variations in flow, and wherein the temperature management branch comprises a cooling and/or heating module configured to cool or heat a coolant passing through temperature management branch. The method comprises controlling a main coolant pump to generate a flow of coolant through the closed circuit, and controlling a flow control module to regulate the flow of coolant through the temperature management branch, such that a regulated flow associated with a target flow rate is directed through the temperature management branch while the remaining flow is directed through the main branch. The third aspect of the disclosure may seek to solve the problem where any modification in the system's configuration necessitates a recalibration of the flow rates to maintain a desired temperature control. A technical benefit of controlling the regulated flow through the temperature management branch is that the regulated flow will remain unaffected by pressure fluctuations and changes in other parts of the closed circuit.

Optionally in some examples, including in at least one preferred example, the method comprises monitoring temperature data within temperature management system, using one or more temperature sensors, and determining the target flow rate based on the temperature data. A technical benefit may include that the flow control module can quickly adjust the regulated flow based on temperature requirements of the system.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1 is a schematic diagram of a temperature management system for regulating the temperature of a thermal load, wherein the temperature management system comprises a flow control module and cooling and/or heating module.
FIG. 2 is a schematic diagram of an example of a temperature management system where the flow control module comprises an auxiliary coolant pump.
FIG. 3 is a schematic diagram of an example of a temperature management system where the flow control module comprises a proportional valve and a pressure valve.
FIG. 4 is a schematic diagram of an alternative example of a temperature management system having a control module comprising an auxiliary coolant pump.
FIG. 5A-5D are schematic diagrams of some example configurations of the cooling and/or heating module.
FIG. 6 is a flow chart of a method for managing temperature of a thermal load in a temperature management system according to an example.
FIG. 7A schematically illustrates a control unit.
FIG. 7B shows an example of a computer program product.
FIG. 8 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

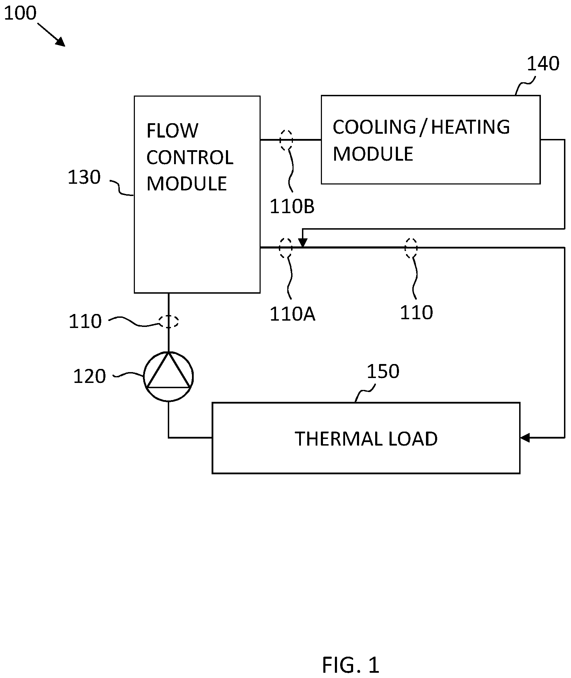

FIG. 1 illustrates a first aspect of the disclosure relating to a temperature management system 100 for regulating the temperature of a thermal load 150. The temperature management system 100 comprises a closed circuit 110 and a main coolant pump 120, wherein the main coolant pump 120 is configured to circulate a coolant through the closed circuit 110 generating a total flow. The closed circuit 110 and the thermal load 150 are thermally connected, thereby facilitating heat transfer to and from the thermal load 150. The main coolant pump 120 may be any type of pump suitable for coolant circulation, e.g., a centrifugal pump. The generated total flow can typically be controlled by an external control unit 130, 700.

A section of the closed circuit 110 is divided into a main branch 110A and a temperature management branch 110B, wherein the main branch (110A) is configured to hold a constant differential pressure between its starting point and its endpoint independent of variations in flow, and wherein the temperature management branch 110B comprises a cooling and/or heating module 140. The cooling and/or heating module 140 may comprise a chiller or a heater, or any combination of chillers and electrical heaters. Alternatively, the cooling and/or heating module 140 may comprise a chiller or a heat exchanger, or any combination of chillers and heat exchangers.

As the temperature of the coolant depends on the flow through the cooling and/or heating module 140, controlling the flow directed through this module enables effective management of the system's temperature. Hence, the flow control module 130 determines a target flow rate based on temperature requirements of the system. In one example, the flow control module 130 is configured to receive temperature data from the thermal load 150 and determine the target flow rate based on the received temperature data. Typically, the thermal load 150 would comprise temperature sensors configured to measure and transmit temperature data, with the temperature data being sent to the flow control module via a system bus. In another example, the flow control module 130 is configured to determine the target flow rate based on coolant temperature. In that case, the flow control module 130 may comprise one or more temperature sensors that measure the temperature of the coolant. The target flow rate may also be determined based on an operating temperature range, such as the operating temperature range of the thermal load 150.

The main coolant pump 120 generates a total flow, which is divided into a regulated flow and a remaining flow. The regulated flow is precisely controlled and directed through the temperature management branch 110B to meet the target flow rate based on specific operational requirements. The remaining flow, not subject to any control, is directed through the main branch 110A. Hence, the flow control module 130 is configured to control the flow of coolant through the temperature management branch 110B, such that a regulated flow with a target flow rate is directed through the temperature management branch 110B while a remaining flow is directed through the main branch 110A.

The flow control module 130 may also have the capability to control certain aspects of the cooling and/or heating module 140, such as activating or deactivating chillers 241A, 241B and electrical heaters 242 or managing shutoff valves 541, 543.

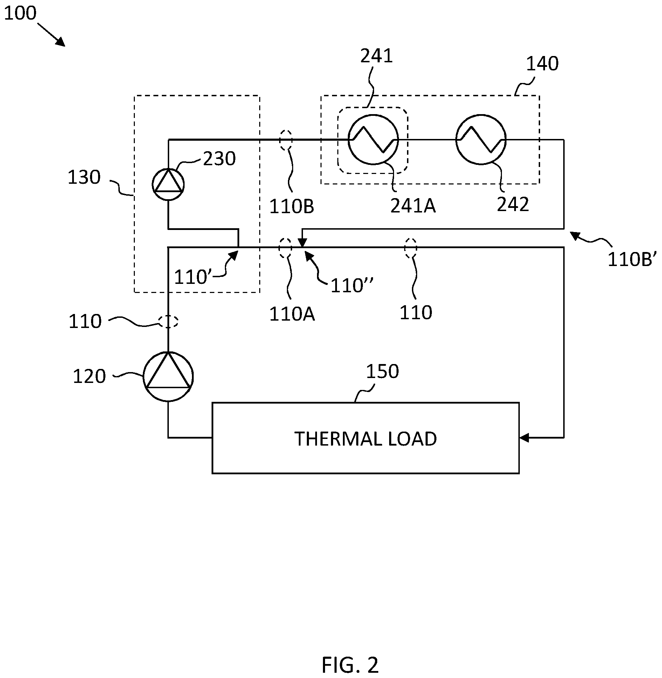

FIG. 2 illustrates an example of the temperature management system 100 where the flow control module 130 comprises an auxiliary coolant pump 230 on the temperature management branch 110B. The auxiliary coolant pump 230 may be any type of pump that is suitable for circulating coolant and allows for a controllable flow rate, e.g., a variable-speed centrifugal pump. In this example, the auxiliary coolant pump 230 is configured to be controlled by the target flow rate to generate the regulated flow that is directed through the temperature management branch 110B. As the total flow generated by the main coolant pump 120 will exceed the regulated flow generated by the auxiliary coolant pump 230, the remaining flow, i.e., the flow that is not the regulated flow, will in the example of FIG. 2 be directed through the main branch 110A. Preferably, in the example of FIG. 2, the constant differential pressure of the main branch 110A is approximately zero.

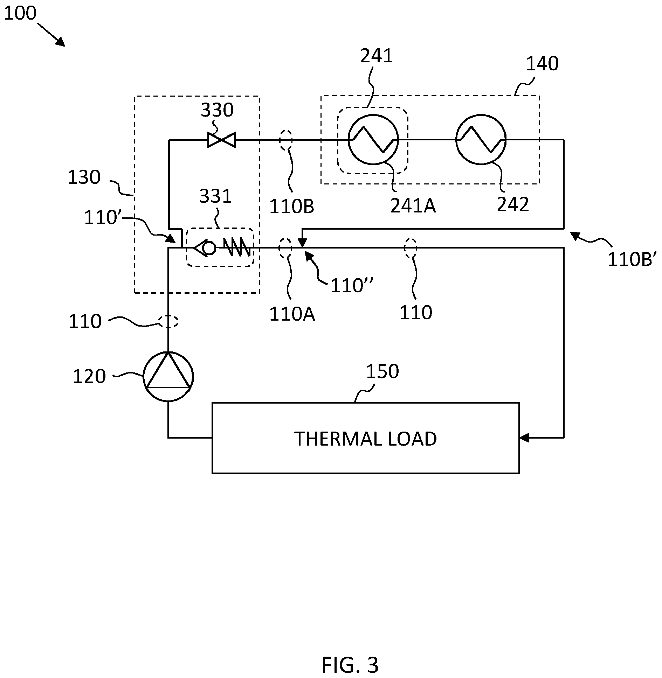

FIG. 3 illustrates another example of the temperature management system 100 where the flow control module 130 comprises a proportional valve 330 on the temperature management branch 110B. The proportional valve 330 may be any type of proportional valve that allows for adjustable flow, e.g., a frequency-controlled solenoid valve. The proportional valve 330 is configured to be controlled by the target flow rate to adjust the regulated flow that is directed through the temperature management branch 110B. The proportional valve (330) may be a frequency-controlled solenoid valve or any other type of valve that allows for precise control of flow rate based on an input signal.

As the total flow generated by the main coolant pump 120 will exceed the regulated flow, the remaining flow, i.e., the flow that is not the regulated flow, will in the example of FIG. 3 be directed through a pressure valve 331 on the main branch 110A. The pressure valve 331 is here configured to hold an essentially constant differential pressure between its inlet and outlet, thereby also ensuring a constant differential pressure over the proportional valve 330. The pressure valve 331 can be realized through multiple approaches. In one example, the pressure valve starts to open at a predetermined crack pressure. Once opened, within its operational range, the valve's pressure characteristic becomes essentially flat, ensuring a stable flow through the temperature management branch 110B. In another example, the pressure valve is a differential pressure control valve specifically engineered to hold a constant differential pressure between its inlet and outlet.

FIGS. 2-3 also illustrate how the closed circuit 110 is divided into the main branch 110A and the temperature management branch 110B at a starting point 110' and reconnected at an endpoint 110". The temperature management branch 110B may advantageously comprise a redirection 110B' back towards the starting point 110', thereby having the endpoint in proximity 110" to the starting point 110'. In one example, the redirection 110B' may be defined as a cumulative directional change of the temperature management branch 110B that is equal to or greater than 270 degrees. In another example, a redirection 110B' may be defined as section of the temperature management branch 110B that has a direction of flow opposite to that of the main branch 110A. In yet another example, the redirection 110B' may be defined by the temperature management branch 110B having a length greater than that of the main branch 110A. An advantage of the temperature management branch 110B comprising a redirection 110B', as defined by the examples above, is that the starting point and endpoint, i.e. the inlet and the outlet of the temperature management branch 110B, will be in close proximity and thereby reduce the flow-dependent pressure drop through the main branch.

Preferably, the main branch 110A is straight. A technical benefit of having the main branch straight may include a reduced flow-dependent pressure drop through the main branch. Preferably, the main branch 110A has a cross-sectional area that is greater than the cross-sectional area of adjacent sections of the closed circuit 110. In one example, the adjacent sections include the closed circuit 110 before the starting point 110' and the closed circuit 110 after the endpoint 110". In another example, the adjacent sections further include the temperature management branch 110B. A technical benefit of the main branch having an increased cross-sectional area may include a reduced flow-dependent pressure drop through the main branch.

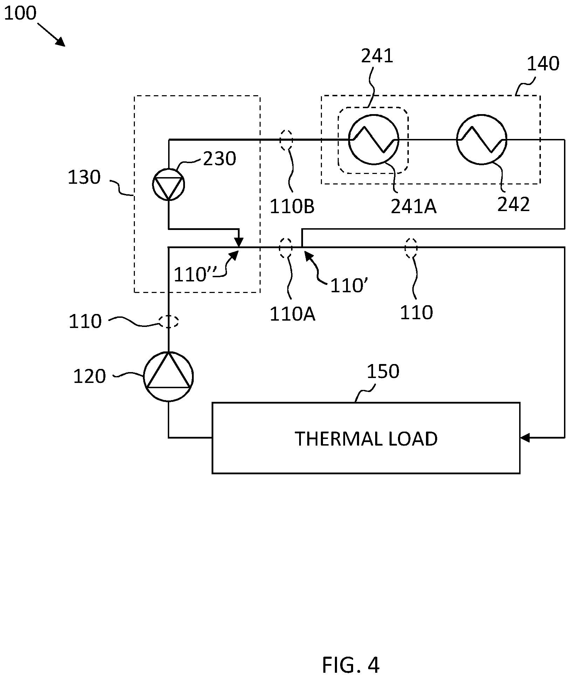

FIG. 4 illustrate another example where the closed circuit 110 is divided into the main branch 110A and the temperature management branch 110B at a starting point 110', but where the temperature management branch 110B is reconnected at an endpoint 110" between the main coolant pump 120 and the starting point 110'. This example closely resembles that of Fig. 2, except for the reversal of the auxiliary pump, consequently reversing the flow through the temperature management branch 110B. This example demonstrates that the endpoint 110" does not necessarily need to be positioned after the starting point 110' in relation to the direction of the flow in the closed circuit 110. The example also demonstrates that the positioning of the auxiliary coolant pump 230 relative to the cooling and/or heating module in the temperature management branch 110B is not necessarily a matter of one being strictly before or after the other, as both configurations may be possible.

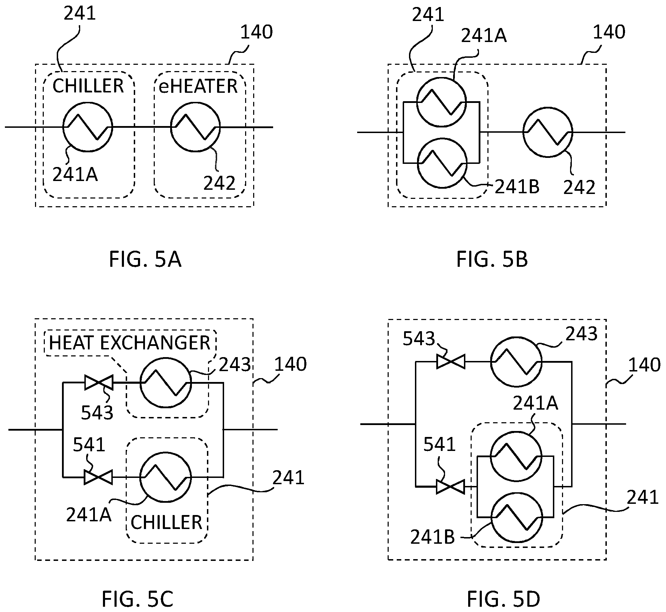

FIGS. 5A-5D illustrate some example configurations of the cooling and/or heating module 140. The illustrated examples comprise different combinations of chillers, electrical heaters (eHEATER) and heat exchangers, but the cooling and/or heating module 140 may also just comprise one type of cooling and/or heating element. In one example, the cooling and/or heating module 140 is a chiller. In another example, the cooling and/or heating module 140 is an electrical heater. In all examples provided here, the chiller may be any type of cooling apparatus suitable for cooling a coolant and the electrical heater 242 may be any type of resistive heating element.

FIG. 5A depicts an example of a cooling and/or heating module 140 that comprises a chiller arrangement 241. The chiller arrangement 241 of this example comprises a first chiller 241A that is configured to cool the coolant passing through the temperature management branch 110B. The cooling and/or heating module 140 of the example of FIG. 5A also comprises an electrical heater 242 connected in series with the chiller arrangement 241 and configured to heat the coolant passing through the temperature management branch. Both the chiller and electrical heater may be selectively powered on and off to avoid opposing each other's function.

FIG. 5B depicts another example of a cooling and/or heating module 140 that comprises a chiller arrangement 241. The chiller arrangement 241 of this example comprises a first chiller 241A in parallel configuration with a second chiller 241B. The cooling and/or heating module 140 of the example of FIG. 5B also comprises an electrical heater 242 connected in series with the chiller arrangement 241.

An advantage of having the chiller arrangement 241 and the electrical heater 242 connected in series may be that no shutoff valves are required to redirect the flow between them.

FIG. 5C depicts a third example of a cooling and/or heating module 140 that comprises a chiller arrangement 241. The chiller arrangement 241 of this example comprises a first chiller 241A configured to cool the coolant passing through the temperature management branch 110B. The cooling and/or heating module 140 of the example of FIG. 5C also comprises a heat exchanger 243 connected in parallel with the chiller arrangement 241. In this configuration, both the heat exchanger and the chiller arrangement are preceded by a respective shutoff valve 541, 543 that allows switching on and off the flow through each branch.

FIG. 5D depicts a fourth example of a cooling and/or heating module 140 that comprises a chiller arrangement 241. The chiller arrangement 241 of this example comprises a first chiller 241A in parallel configuration with a second chiller 241B. The cooling and/or heating module 140 of the example of FIG. 5C also comprises a heat exchanger 243 connected in parallel with the chiller arrangement 241. In this configuration, both the heat exchanger and the chiller arrangement are preceded by a respective shutoff valve that allows switching on and off the flow of each branch.

Each chiller 241A, 241B of the chiller arrangement in the above examples (i.e., FIGS. 5A-5D) can be turned on and off by a control signal. Likewise, any electrical heater 242 can be turned on and off by a control signal. In the examples with a parallel configuration (i.e., FIGS. 5C and 5D) the flow in each branch may be switched on and off using the shutoff valves, where each shutoff valve 541, 543 is operated by a control signal.

Some advantages of using a chiller arrangement 241 with multiple chillers 241A, 241B in parallel configuration include redundancy if one of the chillers fails and flexibility adjusting the cooling capacity based on demand. Likewise, multiple electrical heaters may also be arranged in parallel configuration to provide redundancy and flexibility in heating capacity.

The flow control module 130 and the cooling and/or heating module 140 may be adjusted concurrently to regulate both the flow and the heating/cooling capacity of the coolant. In one example, the flow control module 130 comprises circuitry for controlling both flow control module 130 and the cooling and/or heating module 140.

It should be noted that the temperature management system 100 described herein can be applied to any type of thermal load 150 requiring cooling and/or heating, and is not limited to temperature management systems of vehicles.

A second aspect of the disclosure relates to a vehicle. The vehicle comprises a temperature management system 100 according to any of aforementioned examples, wherein the thermal load 150 is an energy storage system of the vehicle. In one example, the vehicle is a battery electric vehicle (BEV) for which the cooling and/or heating module of FIGS. 5A and 5B can be applied with advantage. In another example, the vehicle is a fuel cell electric vehicle (FCEV) for which the cooling and/or heating module of FIGS. 5C and 5D can be applied with advantage. Preferably, the vehicle may comprise one or more temperature sensors configured to measure temperature data within the energy storage system. For example, the energy storage system 150 may comprise temperature sensors configured to measure and transmit temperature data, with the temperature data being sent to the flow control module via a system bus.

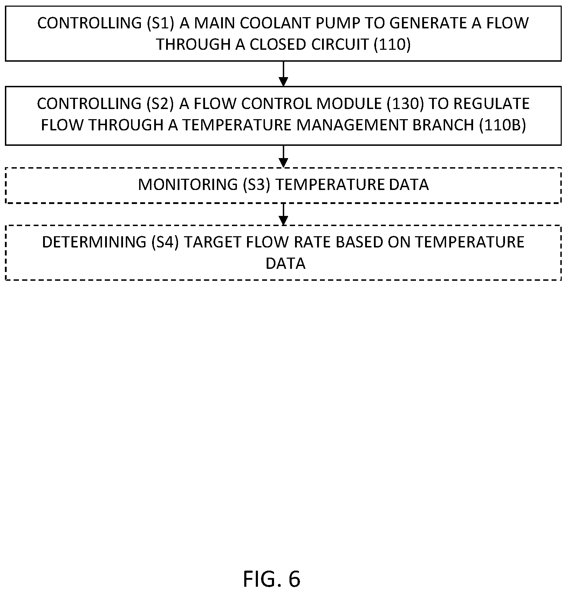

FIG. 6 illustrates a third aspect of the disclosure relating to a method for managing the temperature of a thermal load 150 in a temperature management system 100. The temperature management system 100, including all aforementioned disclosed aspects and variations thereof, may advantageously also be employed in the method. The temperature management system 100 comprises a closed circuit, of which a section is divided into a main branch 110A and a temperature management branch 110B, where the main branch 110A is configured to hold a constant differential pressure between its starting point and its endpoint independent of variations in flow, and where the temperature management branch 110B comprises a cooling and/or heating module 140 configured to cool or heat a coolant passing through temperature management branch 110B.

The method comprises the step of controlling S1 a main coolant pump in the temperature management system 100 to generate a flow of coolant through the closed circuit 110. The method further comprises the step of controlling S2 a flow control module 130 to regulate the flow of coolant through the temperature management branch 110B, such that a regulated flow associated with a target flow rate is directed through the temperature management branch 110B, while the remaining flow is directed through the main branch 110A. An advantage of this method is that the regulated flow through the temperature management branch 110B is not affected by pressure fluctuations and changes in other parts of the closed circuit 110.

In one example, the step of controlling S2 the flow control module may comprise controlling an auxiliary coolant pump 230 to regulate the flow of coolant through the temperature management branch 110B, such that a regulated flow associated with a target flow rate is directed through the temperature management branch 110B, while the remaining flow is directed through the main branch 110A. In another example, the step of controlling S2 the flow control module may comprise controlling a proportional valve 330 to regulate the flow of coolant through the temperature management branch 110B, such that a regulated flow associated with a target flow rate is directed through the temperature management branch 110B, while the remaining flow is directed through the main branch 110A where a pressure valve 331 is configured to hold an essentially constant differential pressure between its inlet and outlet.

The method may further comprise the steps of monitoring S3 temperature data within the temperature management system 100 and determining S4 the target flow rate based on the temperature data. The step of monitoring S3 may comprise receiving or reading temperature data from one or more temperature sensors within the temperature management system 100. Typically, this may include receiving or reading temperature data from one or more temperature sensors located within the thermal load 150. Alternatively, it may comprise receiving or reading temperature data from one or more temperature sensors measuring the coolant temperature. The step of determining S4 the target flow rate based on the temperature data addresses the need to adjust the flow through the cooling and/or heating module 140 in response to temperature data. In one example, determining the target flow rate in S4 may involve increasing the target flow rate if the temperature data indicates a too high temperature. In another example, determining S4 the target flow rate in may involve reducing the target flow rate if the temperature data indicate a too low temperature.

Typically, the method steps S1, S2, S3, and S4 are all performed continuously. However, monitoring S3 a change in temperature data may consequently require determining S4 an updated target flow rate, which in turn will affect the controlling S2 of the flow control module. The steps of monitoring S3 and determining S4 may also be performed before the step of controlling S2 in order to determine an initial target flow rate to be determined before performing the step of controlling S2. In another example, a predetermined target flow rate may be used as an initial target flow rate.

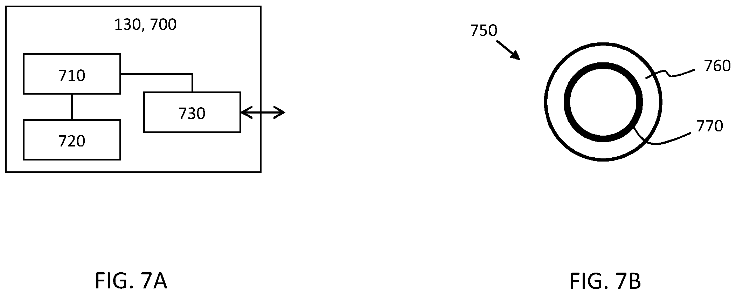

FIG. 7A schematically illustrates, in terms of a number of functional units, the components of a control unit 700 according to aspects of the discussions and methods disclosed herein. This control unit 700 is typically comprised in the vehicle 100. Processing circuitry 710 is provided using any combination of one or more of a suitable central processing unit CPU, multiprocessor, microcontroller, digital signal processor DSP, etc., capable of executing software instructions stored in a computer program product, e.g., in the form of a storage medium 720. The processing circuitry 710 may further be provided as at least one application specific integrated circuit ASIC, or field programmable gate array FPGA.

Particularly, the processing circuitry 710 is configured to cause the control unit 500 to perform a set of operations, or steps, such as the methods discussed in connection to FIG. 6. For example, the storage medium 720 may store the set of operations, and the processing circuitry 710 may be configured to retrieve the set of operations from the storage medium 720 to cause the control unit 700 to perform the set of operations. The set of operations may be provided as a set of executable instructions. Thus, the processing circuitry 710 is thereby arranged to execute methods as herein disclosed.

The storage medium 720 may also comprise persistent storage, which, for example, can be any single one or combination of magnetic memory, optical memory, solid state memory or even remotely mounted memory.

The control unit 700 may further comprise an interface 730 for communications with at least one external device, such as temperature sensors. As such the interface 730 may comprise one or more transmitters and receivers, comprising analogue and digital components and a suitable number of ports for wireline or wireless communication.

The processing circuitry 710 controls the general operation of the control unit 130, 700, e.g., by sending data and control signals to the interface 720 and the storage medium 720, by receiving data and reports from the interface 730, and by retrieving data and instructions from the storage medium 720. Other components, as well as the related functionality, of the control node are omitted in order not to obscure the concepts presented herein.

FIG. 7B illustrates a computer readable medium 760 carrying a computer program comprising program code means 770 for performing, e.g., the methods illustrated in FIG. 6, when said program product is run on a computer. The computer readable medium and the code means may together form a computer program product 750.

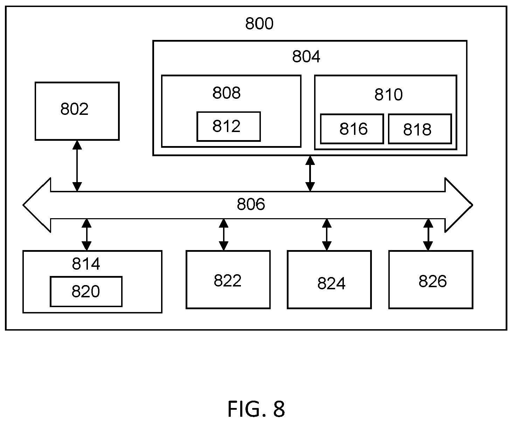

FIG. 8 is a schematic diagram of a computer system 800 for implementing examples disclosed herein. The computer system 800 is adapted to execute instructions from a computer-readable medium to perform these and/or any of the functions or processing described herein. The computer system 800 may be connected (e.g., networked) to other machines in a LAN, an intranet, an extranet, or the Internet. While only a single device is illustrated, the computer system 800 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 800 may comprise at least one computing device or electronic device capable of including firmware, hardware, and/or executing software instructions to implement the functionality described herein. The computer system 800 may include processing circuitry 802 (e.g., processing circuitry including one or more processor devices or control units), a memory 804, and a system bus 806. The computer system 800 may include at least one computing device having the processing circuitry 802. The system bus 806 provides an interface for system components including, but not limited to, the memory 804 and the processing circuitry 802. The processing circuitry 802 may include any number of hardware components for conducting data or signal processing or for executing computer code stored in memory 804. The processing circuitry 802 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 802 may further include computer executable code that controls operation of the programmable device.

The system bus 806 may be any of several types of bus structures that may further interconnect to a memory bus (with or without a memory controller), a peripheral bus, and/or a local bus using any of a variety of bus architectures. The memory 804 may be one or more devices for storing data and/or computer code for completing or facilitating methods described herein. The memory 804 may include database components, object code components, script components, or other types of information structure for supporting the various activities herein. Any distributed or local memory device may be utilized with the systems and methods of this description. The memory 804 may be communicably connected to the processing circuitry 802 (e.g., via a circuit or any other wired, wireless, or network connection) and may include computer code for executing one or more processes described herein. The memory 604 may include non-volatile memory 808 (e.g., read-only memory (ROM), erasable programmable read-only memory (EPROM), electrically erasable programmable read-only memory (EEPROM), etc.), and volatile memory 810 (e.g., random-access memory (RAM)), or any other medium which can be used to carry or store desired program code in the form of machine-executable instructions or data structures and which can be accessed by a computer or other machine with processing circuitry 802. A basic input/output system (BIOS) 812 may be stored in the non-volatile memory 808 and can include the basic routines that help to transfer information between elements within the computer system 800.

The computer system 800 may further include or be coupled to a non-transitory computer-readable storage medium such as the storage device 814, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 814 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 814 and/or in the volatile memory 810, which may include an operating system 816 and/or one or more program modules 818. All or a portion of the examples disclosed herein may be implemented as a computer program 820 stored on a transitory or non-transitory computer-usable or computer-readable storage medium (e.g., single medium or multiple media), such as the storage device 814, which includes complex programming instructions (e.g., complex computer-readable program code) to cause the processing circuitry 802 to carry out actions described herein. Thus, the computer-readable program code of the computer program 820 can comprise software instructions for implementing the functionality of the examples described herein when executed by the processing circuitry 802. In some examples, the storage device 814 may be a computer program product (e.g., readable storage medium) storing the computer program 820 thereon, where at least a portion of a computer program 820 may be loadable (e.g., into a processor) for implementing the functionality of the examples described herein when executed by the processing circuitry 802. The processing circuitry 802 may serve as a controller or control system for the computer system 800 that is to implement the functionality described herein.

The computer system 800 may include an input device interface 822 configured to receive input and selections to be communicated to the computer system 800 when executing instructions, such as from a keyboard, mouse, touch-sensitive surface, etc. Such input devices may be connected to the processing circuitry 802 through the input device interface 822 coupled to the system bus 806 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 824 configured to forward output, such as to a display, a video display unit (e.g., a liquid crystal display (LCD) or a cathode ray tube (CRT)). The computer system 800 may include a communications interface 826 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A temperature management system 100 for regulating the temperature of a thermal load 150, wherein the temperature management system 100 comprises a closed circuit 110 and a main coolant pump 120 configured to circulate a coolant through the closed circuit 110, and wherein the closed circuit 110 and the thermal load 150 are thermally connected, the temperature management system 100 characterized in that a section of the closed circuit is divided into a main branch 110A and a temperature management branch 110B, wherein the main branch (110A) is configured to hold a constant differential pressure between its starting point and its endpoint independent of variations in flow, and wherein the temperature management branch 110B comprises a cooling and/or heating module 140, and a flow control module 130 is configured to control the flow of coolant through the temperature management branch 110B, such that a regulated flow associated with a target flow rate is directed through the temperature management branch 110B while any remaining flow is directed through the main branch 110A.

Example 2: The temperature management system 100 of example 1, wherein the flow control module 130 comprises an auxiliary coolant pump 230 on the temperature management branch 110B, and where the auxiliary coolant pump 230 is configured to be controlled by the target flow rate to generate the regulated flow.

Example 3: The temperature management system 100 of example 2, wherein the constant differential pressure is approximately zero.

Example 4: The temperature management system 100 of example 1, wherein the flow control module 130 comprises: a proportional valve 330 on the temperature management branch 110B, where the proportional valve 330 is configured to be controlled by the target flow rate to adjust the regulated flow, and a pressure valve 331 on the main branch 110A configured to hold a constant differential pressure between its inlet and outlet.

Example 5: The temperature management system of example 4, wherein the proportional valve 330 is a frequency-controlled solenoid valve.

Example 6: The temperature management system 100 of any of examples 1-5, wherein the closed circuit is divided into the main branch 110A and the temperature management branch 110B at a starting point 110' and reconnected at an endpoint 110", and wherein the temperature management branch 110B comprises a redirection 110B' back towards the starting point 110', thereby having the endpoint in proximity 110" to the starting point 110'.

Example 7: The temperature management system 100 of any of examples 1-6, wherein the main branch 110A is straight and/or has a cross-sectional area that is greater than the cross-sectional area of adj acent sections 110, 110B of the closed circuit 110.

Example 8: The temperature management system 100 of any of examples 1-7, wherein the flow control module 130 is configured to receive temperature data from the thermal load 150 and determine the target flow rate based on the received temperature data.

Example 9: The temperature management system 100 of any of examples 1-8, wherein the flow control module 130 is configured to determine the target flow rate based on coolant temperature.

Example 10: The temperature management system 100 of any of examples 1-9, wherein the cooling and/or heating module 140 comprises a chiller arrangement 241, and wherein the chiller arrangement 241 comprises a first chiller 241A configured to cool the coolant passing through the temperature management branch 110B.

Example 11: The temperature management system 100 of example 10, wherein the chiller arrangement 241 further comprises a second chiller 241B connected in parallel with the first chiller 241A.

Example 12: The temperature management system 100 of any of examples 10-11, wherein the cooling and/or heating module 140 comprises an electrical heater 242 connected in series with the chiller arrangement 241 and configured to heat the coolant passing through the temperature management branch 110B.

Example 13: The temperature management system 100 of any of examples 10-11, wherein the cooling and/or heating module 140 comprises a heat exchanger 243 connected in parallel with the chiller arrangement 241, and wherein both the heat exchanger and the chiller arrangement are preceded by a respective shutoff valve 541, 543.

Example 14: The temperature management system of any one of examples 1-13, wherein the flow control module 130 and the cooling and/or heating module 140 are adjusted concurrently to regulate both the flow and the heating/cooling of the coolant.

Example 15: An electric vehicle, comprising a temperature management system 100 according to any of examples 1-14, and wherein the thermal load 150 is an energy storage system of the vehicle.

Example 16: The electric vehicle of example 15, wherein the electric vehicle comprises one or more temperature sensors configured to measure temperature data within the energy storage system.

Example 17: A method for managing temperature of a thermal load 150 in a temperature management system 100, wherein a section of a closed circuit 110 is divided into a main branch 110A and a temperature management branch 110B, wherein the main branch (110A) is configured to hold a constant differential pressure between its starting point and its endpoint independent of variations in flow, and and wherein the temperature management branch 110B comprises a cooling and/or heating module 140 configured to cool or heat a coolant passing through temperature management branch 110B, the method comprising controlling S1 a main coolant pump to generate a flow of coolant through the closed circuit 110, and controlling S2 a flow control module 130 to regulate the flow of coolant through the temperature management branch 110B, such that a regulated flow associated with a target flow rate is directed through the temperature management branch 110B while the remaining flow is directed through the main branch 110A.

Example 18: The method of example 17, wherein the method further comprises:
monitoring S3 temperature data within temperature management system 100, using one or more temperature sensors, and determining S4 the target flow rate based on the temperature data.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A temperature management system (100) for regulating the temperature of a thermal load (150), wherein the temperature management system (100) comprises a closed circuit (110) and a main coolant pump (120) configured to circulate a coolant through the closed circuit (110), and wherein the closed circuit (110) and the thermal load (150) are thermally connected, the temperature management system (100) **characterized in that**
a section of the closed circuit is divided into a main branch (110A) and a temperature management branch (110B), wherein the main branch (110A) is configured to hold a constant differential pressure between its starting point and its endpoint independent of variations in flow, and wherein the temperature management branch (110B) comprises a cooling and/or heating module (140), and
a flow control module (130) is configured to control the flow of coolant through the temperature management branch (110B), such that a regulated flow associated with a target flow rate is directed through the temperature management branch (110B) while any remaining flow is directed through the main branch (110A).

2. The temperature management system (100) of claim 1, wherein the flow control module (130) comprises an auxiliary coolant pump (230) on the temperature management branch (110B), and where the auxiliary coolant pump (230) is configured to be controlled by the target flow rate to generate the regulated flow.

3. The temperature management system (100) of claim 2, wherein the constant differential pressure is approximately zero.

4. The temperature management system (100) of claim 1, wherein the flow control module (130) comprises:
a proportional valve (330) on the temperature management branch (110B), where the proportional valve (330) is configured to be controlled by the target flow rate to adjust the regulated flow, and
a pressure valve (331) on the main branch (110A) configured to hold the constant differential pressure between its inlet and outlet.

5. The temperature management system of claim 4, wherein the proportional valve (330) is a frequency-controlled solenoid valve.

6. The temperature management system (100) of any of claims 1-5, wherein the closed circuit is divided into the main branch (110A) and the temperature management branch (110B) at a starting point (110') and reconnected at an endpoint (110''), and wherein the temperature management branch (110B) comprises a redirection (110B') back towards the starting point (110'), thereby having the endpoint in proximity (110") to the starting point (110').

7. The temperature management system (100) of any of claims 1-6, wherein the main branch (110A) is straight and/or has a cross-sectional area that is greater than the cross-sectional area of adjacent sections (110, 110B) of the closed circuit (110).

8. The temperature management system (100) of any of claims 1-7, wherein the flow control module (130) is configured to receive temperature data from the thermal load (150) and determine the target flow rate based on the received temperature data.

9. The temperature management system (100) of any of claims 1-8, wherein the flow control module (130) is configured to determine the target flow rate based on coolant temperature.

10. The temperature management system (100) of any of claims 1-9, wherein the cooling and/or heating module (140) comprises a chiller arrangement (241), and wherein the chiller arrangement (241) comprises a first chiller (241A) configured to cool the coolant passing through the temperature management branch (110B).

11. The temperature management system (100) of claim 10, wherein the chiller arrangement (241) further comprises a second chiller (241B) connected in parallel with the first chiller (241A).

12. The temperature management system (100) of any of claims 10-11, wherein the cooling and/or heating module (140) comprises an electrical heater (242) connected in series with the chiller arrangement (241) and configured to heat the coolant passing through the temperature management branch (110B).

13. The temperature management system (100) of any of claims 10-11, wherein the cooling and/or heating module (140) comprises a heat exchanger (243) connected in parallel with the chiller arrangement (241), and wherein both the heat exchanger and the chiller arrangement are preceded by a respective shutoff valve (541, 543).

14. The temperature management system of any one of claims 1-13, wherein the flow control module (130) and the cooling and/or heating module (140) are adjusted concurrently to regulate both the flow and the heating/cooling of the coolant.

15. An electric vehicle, comprising a temperature management system (100) according to any of claims 1-14, and wherein the thermal load (150) is an energy storage system of the vehicle.

16. The electric vehicle of claim 15, wherein the electric vehicle comprises one or more temperature sensors configured to measure temperature data within the energy storage system.

17. A method for managing temperature of a thermal load (150) in a temperature management system (100), wherein a section of a closed circuit (110) is divided into a main branch (110A) and a temperature management branch (110B), wherein the main branch (110A) is configured to hold a constant differential pressure between its starting point and its endpoint independent of variations in flow, and wherein the temperature management branch (110B) comprises a cooling and/or heating module (140) configured to cool or heat a coolant passing through temperature management branch (110B), the method comprising:
controlling (S1) a main coolant pump to generate a flow of coolant through the closed circuit (110), and
controlling (S2) a flow control module (130) to regulate the flow of coolant through the temperature management branch (110B), such that a regulated flow associated with a target flow rate is directed through the temperature management branch (110B) while the remaining flow is directed through the main branch (110A).

18. The method of claim 17, wherein the method further comprises:
monitoring (S3) temperature data within temperature management system (100), using one or more temperature sensors, and
determining (S4) the target flow rate based on the temperature data.

19. A computer program (550) comprising program code means for performing the steps of any of claims 17-18 when said program is run on a computer or on processing circuitry (510) of a control unit (130).

20. A computer readable medium (560) carrying a computer program (570) comprising program code means for performing the steps of any of claims 17-18 when said program product is run on a computer or on processing circuitry (510) of a control unit (130).
